Europäisches Patentamt

European Patent Office

Office européen des brevets

(11) Publication number: **0 416 191 A2**

# EUROPEAN PATENT APPLICATION

(21) Application number: **89830481.1**

(22) Date of filing: **06.11.89**

(51) Int. Cl.5: **F23G 5/02, F23G 5/46, F23J 15/00**

(30) Priority: **06.09.89 IT 4833189**

(43) Date of publication of application:
**13.03.91 Bulletin 91/11**

(84) Designated Contracting States:
**AT BE CH DE ES FR GB GR IT LI LU NL SE**

(71) Applicant: **CHIAPPINI GOFFREDO E FIGLI s.n.c.**
**Pratica di Mare**
**Campo Jemini (Pomezia)(IT)**

(72) Inventor: **Chiappini, Goffredo,**
**8, via Volturno**
**I-04011 Aprilia - Latina(IT)**

(54) System of disintegration of urban waste products by production of electric power and purification of exhaust gases.

(57) A system disintegrating waste products to be installed near urban areas.

## SYSTEM OF DISINTEGRATION OF URBAN WASTE PRODUCTS BY PRODUCTION OF ELECTRIC POWER AND PURIFICATION OF EXHAUST GASES

This system eliminating urban waste materials can be distinguished from any other existing systems of incineration owing to its distinctive, special features.

It is well known that present systems destroy urban waste products while causing pollution, letting in the air a very high percentage of polluting gases and unburnt particles. Furthermore the high operating costs, due to the use of electric power, must be considered.

With this system it will be possible to solve the above-mentioned problems as follows: waste materials should be unloaded in a special stocking tank which must be completely sealed up, so that it could not let in the air any nasty smells due to gases generated by waste products in a state of decomposition, until they are completely destroyed. The above-mentioned tank is fitted with a very efficient system that is also conceived by us.

This system is able to eliminate any nasty smells in the tank , by condensing the gases and letting in the athmosphere only detoxicated air; these latter smells come from the gases which are the result of putrefaction of weste products.

After this process the weste materials are mechanically carried by conveyor belts into a tunnel separating some of-the urban waste materials. By means of these conveyor belts, waste materials go through a triturating tunnel and after that they are carried into a drying and pulverizing tunnel so as to be reduced to powder and almost disintegrated by combustion. In the meanwhile a high temperature generated inside the incinerator overheats a steam producing boiler (that is installed in the incinerator), so that high pressure steam comes out from it. This steam sets in motion some electric current generators with a steam turbines. These turbines are able to generate electric power so as to feed every engine and electrical machinery used in the process of disintegration of waste materials. There is also the advantage that the quality of electric power generated by these turbines is much larger than the quantity of electric power required by the equipment itself. Consequently extra electric power is available for other public purposes. We should state that the incinerators' smoke-stacks are fitted with our system of fumes and gas purification, and we are able to assure you that the results are excellent indeed.

The above-described equipment has several functions:it is able to triturate,dry and pulverize urban waste materials,while producing the high heat required for an efficient combustion.

The result is a complete elimination of exhaust gases in the athmosphere.

## Claims

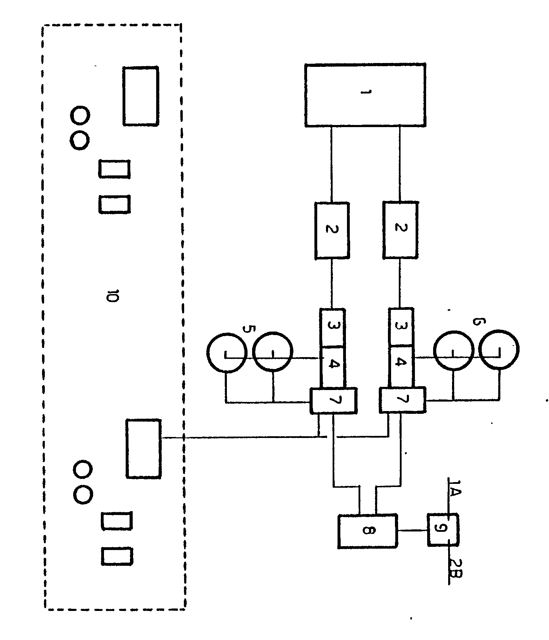

1. We claim that our equipment described in fig. 1 is able to eliminate urban waste products with a triturating,drying and pulverizing process. In addiction exhaust gases are completely eliminated;

2. We claim the drying process and pulverization of urban waste products and electric power production by steam-turbine propulsion.
We also claim our Copyright.